# EUROPEAN PATENT APPLICATION

(11) **EP 4 631 863 A1**
(43) Date of publication of application: **15.10.2025**
(21) Application number: 24382370.5
(22) Date of filing: 09.04.2024
(51) Int. Cl.: B64D 45/00, H01M 10/48

(54) **METHOD FOR DETECTING A BATTERY THERMAL RUNAWAY IN AN AIRCRAFT**

(71) Applicant: AIRBUS OPERATIONS, S.L.U., 28906 Getafe (Madrid) (ES)
(72) Inventor: GONIMA, Erick, 28906 GETAFE (Madrid) (ES); DE BROUWER, Gabrielle Josephine Christiane, 28906 GETAFE (Madrid) (ES); ANDREU FERNANDEZ, Francisco Manuel, 28906 GETAFE (Madrid) (ES)
(74) Representative: Herrero & Asociados, S.L.

(57) **Abstract**

In the method for detecting a battery thermal runaway in an aircraft, the aircraft comprises a system for monitoring one or more batteries for detecting a thermal runaway; an installation zone, such as an avionics bay compartment, comprising a smoke detection system and an overheat detection system; and the method comprises the following steps: if a thermal runaway is detected by the one or more batteries, the smoke detection system and the overheat detecting system are checked; if smoke or an overheat is detected, an uncontained thermal runaway alert is displayed; if a thermal runaway is detected with no smoke and no overheat, a contained thermal runaway alert is displayed.

It permits to segregate two different scenarios, a contained thermal runaway and an uncontained thermal runaway, using the sensors of the aircraft, to be able to display to the pilot only the relevant scenario to limit the operational impacts.

## Description

The present invention relates to a method for detecting a battery thermal runaway in an aircraft.

### Background of the invention

Batteries are widely used in various industries ranging from consumer electronics to automotive applications, providing portable power sources for a multitude of devices. However, one significant challenge associated with batteries is the risk of thermal runaway, which can lead to severe consequences including fires and explosions, which can be even more severe when used in aviation.

Thermal runaway occurs when the internal temperature of a battery cell increases uncontrollably, typically due to factors such as overcharging, external heat sources, internal short circuits, or manufacturing defects. As the temperature rises, chemical reactions within the battery accelerate, releasing additional heat and causing a self-reinforcing cycle of thermal runaway. This phenomenon is particularly prevalent in lithium-ion batteries, which are commonly used due to their high energy density and rechargeable properties.

The consequences of thermal runaway can be severe, posing significant safety risks to both users and the surrounding environment. Traditional methods of mitigating thermal runaway, such as incorporating thermal protection devices or improving battery management systems, have limitations in effectively preventing or suppressing thermal runaway events.

When the battery packs are used in aircrafts, the burnt gases produced in a thermal runaway must be evacuated outside the battery and outside the aircraft for the safety of the flight.

For that purpose, batteries are installed associated with piping, in order to carry the burnt gases directly outside the aircraft without impacts inside. It is important to highlight that batteries and their associated installation hardware are usually located in the avionics bay or other aircraft zones that are surrounded by many critical equipment.

The detection of a thermal runaway is done by the battery management system, based on battery internal temperature, voltage and current sensors and monitoring algorithms.

However, the casing of the battery and the exhaust pipes are not monitored as the interior of the battery. Hence, the detection of a potential gas leak or burst in the battery casing or in the exhaust system is not ensured. This means that currently it is not possible to segregate a thermal runaway that was contained versus an uncontained thermal runaway in which the burnt gases are spread inside the aircraft.

As a consequence, the information displayed to the pilots is the same in both cases (contained and uncontained).

The operational burden and actions associated to each scenario are very different:
- A contained thermal runaway is associated with the loss of the battery but the flight can continue without a major consequence.
- An uncontained thermal runaway implies a change of aircraft trajectory to land as soon as possible at the closest airport or even at the next suitable landscape, due to the toxic gas release in the avionic bay or in the given installation zone of the battery, that can also pollute the rest of the aircraft.

### Description of the invention

Therefore, an objective of the present invention is to provide a method for detecting a battery thermal runaway in an aircraft that permits to segregate two different scenarios, a contained thermal runaway and an uncontained thermal runaway, using the sensors of the aircraft, such as smoke and heat detection, to be able to display to the pilot only the relevant scenario to limit the operational impacts.

The method for detecting a battery thermal runaway in an aircraft of the invention solves the above-mentioned disadvantages and has other advantages which will be described below.

The method for detecting a battery thermal runaway in an aircraft according to the present invention is described in the independent claim, and the dependent claims include additional features that are optional.

In particular, the aircraft comprises:
- a system for monitoring one or more batteries for detecting a thermal runaway;
- an installation zone, such as an avionics bay compartment, comprising a smoke detection system and an overheat detection system;
and the method comprises the following steps:
- if a thermal runaway is detected by the one or more batteries, the smoke detection system and the overheat detecting system are checked;
- if smoke or an overheat is detected, an uncontained thermal runaway alert is displayed;
- if a thermal runaway is detected with no smoke and no overheat, a contained thermal runaway alert is displayed.

Therefore, the object of the present invention is to use the smoke detection system and the overheat detection system to segregate the scenario of a contained battery thermal runaway in which the burnt gases are correctly evacuated outside the aircraft, from the uncontained thermal runaway in which the gases leak through the installation zone.

The advantage of this improved detection is to be able to reduce the operational burden for the pilots and airlines, by limiting to the strict minimum needed:
- A contained thermal runaway is associated with the loss of the battery but the flight can continue without an additional disturbance than the operational consequence of the battery loss. The correct indication to the crew will allow them to understand the event that can be quite noisy even in a contained scenario. Furthermore, maintenance operations post flight would be dedicated to the replacement of the affected battery and piping only, but not to the installation zone compartment itself or surrounding systems.
- An uncontained thermal runaway implies a change of aircraft trajectory to land as soon as possible at the closest airport or even at the next suitable landscape. It is a critical safety scenario, and the operational consequences are very high for an airline. Furthermore, maintenance operations post flight would be dedicated to the whole compartment, with potential cleaning and replacing of other equipment in the affected area, not only the battery and piping itself.

### Brief description of the drawings

For a better understanding of what has been explained above, some drawings are included in which, schematically and only by way of a non-limiting example, a practical case of embodiment is represented.

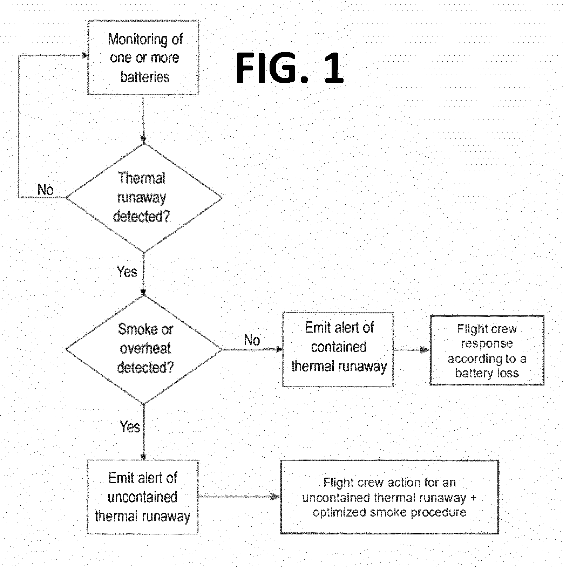

Figure 1 is a block diagram of the system for detecting a battery thermal runaway in an aircraft according to the present invention.

### Description of a preferred embodiment

Figure 1 shows in a block diagram of the method for detecting a battery thermal runaway in an aircraft, said aircraft comprising an installation zone, such as an avionics bay compartment.

First, a battery, or any battery in an aircraft, is monitored by a monitoring system, and if this monitoring system detects a temperature and/or pressure rise, it sends a "thermal runaway" to the aircraft warning system to be displayed.

In case of an uncontained thermal runaway due to a battery casing breach or a piping leak, burnt hot gases and/or smoke and/or flames will flow into the avionics bay compartment or battery installation zone of the aircraft.

Smoke detectors located in the avionics bay compartment will detect the smoke and send an alert of "Avionics bay smoke detected" to the aircraft warning system to be displayed.

In the avionics bay compartment, there is also an overheat detection system monitoring the air flow temperature, since it is a pressurized area with controlled temperature.

When the hot gases enter the avionics bay compartment, the overheat detection system will detect the temperature rise in the avionics airflow, and an alert of "Avionics bay air overheat" will be sent to the aircraft warning system to be dispalyed.

Both smoke and overheat detection systems help the detection of a contained or an uncontained thermal runaway, since an uncontained thermal runaway can have smoke and hot gases, or only hot gases, or only smoke.

Therefore, the method according to the present invention is implemented combining these three signals to be displayed when needed an alert of "uncontained thermal runaway" to the pilot, only when indeed the thermal runaway is uncontained, and not by default as it is currently done.

In particular, the "uncontained thermal runaway" alert is displayed when further to the thermal runaway of the battery is detected also at least one of smoke or overheat is detected in the avionics bay compartment.

If only the thermal runaway of the battery is detected, but not smoke or overheat in the avionics bay compartment, then it is determined that the thermal runaway is "contained", and only the alert of "thermal runaway" is sent to the aircraft warning system.

This would also give the possibility to adapt the "Smoke detected" procedure, since the source would have been identified as the battery, avoiding a complicated sequence of switching off other systems to determine and isolating the source of smoke.

## Claims

1. Method for detecting a battery thermal runaway in an aircraft, the aircraft comprising:
- a system for monitoring one or more batteries for detecting a thermal runaway;
- an installation zone, such as an avionics bay compartment, comprising a smoke detection system and an overheat detection system;
and the method comprises the following steps:
- if a thermal runaway is detected by the one or more batteries, the smoke detection system and the overheat detecting system are checked;
- if smoke or an overheat is detected, an uncontained thermal runaway alert is displayed;
- if a thermal runaway is detected with no smoke and no overheat, a contained thermal runaway alert is displayed.
